(19) Europäisches Patentamt

European Patent Office

Office européen des brevets

(11) EP 4 769 312 A1

(12) **EUROPEAN PATENT APPLICATION**

(43) Date of publication:
01.07.2026 Bulletin 2026/27

(21) Application number: 25227279.4

(22) Date of filing: 25.12.2025

(51) International Patent Classification (IPC):
*G06T 7/73* *(2017.01)*

(52) Cooperative Patent Classification (CPC):
**G06T 7/73;** G06T 2207/30252

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 27.12.2024 TW 113151829

(71) Applicant: **Autoequips Tech Co., Ltd.
New Taipei City 23557 (TW)**

(72) Inventor: **Wang, Ting-Peng
23557 New Taipei City (TW)**

(74) Representative: **Lang, Christian
LangPatent Anwaltskanzlei IP Law Firm
Ingolstädter Straße 5
80807 München (DE)**

(54) **METHOD FOR DETERMINING ARTICULATION ANGLE BETWEEN TRACTOR UNIT AND SEMI-TRAILER USING IMAGES**

(57) A method for determining the articulation angle between the tractor unit and semi-trailer of an articulated vehicle using images is provided. At least one image capture device is mounted on a lateral side of the tractor unit. An image processing device receives an image taken by the image capture device, generates the corresponding 2D image, sets as a feature point a semi-trailer area that is on the same side as the image capture device, and generates data entries including different articulation angles referencing the feature point and the corresponding image coordinates of the feature point. When the vehicle turns in a direction corresponding to the lateral side, the image processing device recognizes, and obtains the horizontal coordinate of, the feature point in a current 2D image and derives the articulation angle from at least two of the data entries that include horizontal coordinates closest to the feature point's current one.

**Description**

BACKGROUND OF THE INVENTION

1. Technical Field

The present invention relates to an on-board image system applied to an articulated vehicle. More particularly, the invention relates to a method for determining the articulation angle between the tractor unit and semi-trailer of an articulated vehicle by directly using images without having to intervene in the system of the vehicle, wherein the articulation angle determined has diverse applications within and/or around the system.

2. Description of Related Art

Traffic accidents keep occurring. Some particularly notable cases are associated with articulated vehicles, which have a high driver seat, an extended vehicle body, numerous blind spots around the vehicle, a great weight, a long wheelbase, and large turning radii. These and other factors of articulated vehicles, coupled with the multitude of issues that an articulated vehicle driver must attend to while driving, often make it difficult for the driver to respond to sudden situations immediately, which can result in injuries. This has been a long-standing challenge that the industry has continually sought to improve.

While various on-board systems are now commercially available to assist the driver and enhance safety, the system of a vehicle is typically not made open because of the vehicle's original factory settings or due to confidentiality or other factors. In most cases, therefore, a vehicle user can only use the functional modules pre-installed by the original manufacturer and cannot integrate other practically needed functional modules into the vehicle system. This is a major reason why many existing driver assistance systems have difficulty being used among, if applicable at all to, different vehicle models.

BRIEF SUMMARY OF THE INVENTION

The primary objective of the present invention is to provide a method that uses images to determine the articulation angle between the tractor unit and semi-trailer of an articulated vehicle. The method does not have to intervene in the system of the articulated vehicle to obtain data but can directly use an external image capture device to determine the articulation angle between the tractor unit and the semi-trailer. Therefore, the method can be easily applied to an on-board image system additionally installed on the articulated vehicle.

Another objective of the present invention is for the articulation angle determined by way of images to have diverse applications within and/or around the system of the articulated vehicle. For example, when the vehicle is turning, the on-board image system can adjust the early-warning detection area along a lateral side of the vehicle based on the real-time articulation angle to enhance turning safety. Or, the real-time articulation angle can be used to determine whether or not the vehicle is drifting during travel, so as to provide a lane-keeping early warning in conjunction with lane recognition. Alternatively, the real-time articulation angle can be used to fine-tune the viewing angle of an electronic rear-view mirror, adjust a cargo securing system, or carry out other similar functions, thus adding to the diversity of applications of the articulation angle.

To achieve the foregoing objectives and effects, the method provided by the present invention for determining the articulation angle between a tractor unit and a semi-trailer using images is applied to an articulated vehicle to determine the articulation angle between its tractor unit and semi-trailer. The method essentially includes the following steps. At least one image capture device is provided, wherein the image capture device is mounted on a lateral side of the tractor unit to take images in a lateral and rearward direction. An image processing device receives an image taken by the image capture device and generates a corresponding two-dimensional (2D) image that can be displayed through a display device. The image processing device further sets a feature point and generates a plurality of data entries based on the correspondence between a plurality of different articulation angles referencing the feature point and image coordinates of the feature point, wherein the feature point is an area of the semi-trailer that is on the same side as the image capture device. When the articulated vehicle is running and turns in a direction corresponding to the lateral side, the image processing device can immediately recognize the feature point in the current 2D image, obtain the horizontal coordinate of the feature point in the current 2D image, and then derive the articulation angle of the tractor unit with respect to the semi-trailer from at least two of the data entries that include horizontal coordinates closest to the horizontal coordinate of the feature point in the current 2D image.

According to the method described above, the image capture device should be mounted to produce a clear horizontal field of view for image taking. The horizontal field of view for image taking includes an inner field of view that spans an angle of at least three degrees and an outer field of view that spans an angle of at least 42 degrees. The inner field of view starts from the exact rearward direction of the image capture device and extends in an inward direction toward the tractor unit. The outer field of view starts from the exact rearward direction of the image capture device and extends in an outward direction away from the tractor unit.

Preferably, the angle of the inner field of view is in the range from three to six degrees, and the angle of the outer field of view is in the range from 42 to 130 degrees.

Furthermore, the area that is set as the feature point in the method of the present invention is preferably the tail end of the semi-trailer.

According to the method described above, the data entries include the data of the horizontal coordinates of the feature point in 2D images each corresponding to one of the plurality of different articulation angles between the tractor unit and the semi-trailer, and the plurality of different articulation angles in the data entries have equal angular intervals defined by a predetermined angle.

Moreover, the predetermined angle defining the equal angular intervals is preferably ten degrees at most.

In one feasible embodiment, the data entries can be generated by recording actual observations or by derivation through a function. Recording actual observations involves the following: The tractor unit is actually operated and turned to each of the plurality of different articulation angles with respect to the semi-trailer, and during the process, the horizontal coordinate of the feature point in the 2D image corresponding to each of the plurality of different articulation angles is recorded. Derivation through a function involves the following: First, four corner points are used to determine a conversion function between coordinates in a real environment (hereinafter also referred to as real-environment coordinates) and coordinates in the corresponding 2D images. Then, the real-environment coordinates of the feature point after turning to each of the plurality of different articulation angles are calculated based on a known set of real-environment coordinates of the feature point. Lastly, the horizontal coordinate of the feature point in the 2D image corresponding to each of the plurality of different articulation angles is derived through the conversion function.

Besides, in the method of the present invention, the image processing device uses interpolation to derive the articulation angle of the tractor unit with respect to the semi-trailer from the two data entries whose horizontal coordinates are closest to the horizontal coordinate of the feature point in the current 2D image.

It can be known from the above that the method of the present invention for determining the articulation angle between a tractor unit and a semi-trailer using images can easily employ an image capture device additionally mounted on a rear-view mirror and directly use an image taken by the image capture device in combination with built-in data entries to determine the articulation angle between the tractor unit and the semi-trailer rapidly or in real time. Moreover, the articulation angle determined can be further used within and/or around the system of the vehicle to, for example: (1) improve the accuracy of blind spot detection during a turn by using the articulation angle to modify a vehicle-side early warning area (where image recognition is applied) in real time when the vehicle is turning, preventing a shift of the viewing angle of the image capture device caused by the turn from hindering accurate early warning; (2) enhance the performance of a lane-keeping system by using the articulation angle to help determine abnormal deviations during travel and provide a warning to the driver, thereby improving the system's performance; (3) fine-tune the viewing angle of an electronic rear-view mirror by using the articulation angle to adjust the viewing angle automatically, thereby providing an optimal view of the rear and side-rear areas; and (4) reinforce a cargo securing system by using the articulation angle to adjust a cargo securing device automatically, thereby reducing the risk of cargo shifting and damage caused by centrifugal force during a turn.

BRIEF DESCRIPTION OF THE SEVERAL VIEWS OF THE DRAWINGS

The foregoing objectives, effects, and features of the present invention can be better understood by referring to the following detailed description of a preferred embodiment of the invention in conjunction with the accompanying drawings, in which:

FIG. 1 is a block diagram of an on-board image system to which an embodiment of the invention is applied;
FIG. 2 is the flowchart of the embodiment of the invention;
FIG. 3 schematically shows the horizontal field of view for image taking by an image capture device in the embodiment of the invention;
FIG. 4A schematically shows the feature point in the embodiment of the invention in a real environment during a turn;
FIG. 4B shows the feature point in the embodiment of the invention in 2D images corresponding to the same turn as in FIG. 4A;
FIG. 5 schematically shows how corner points are used in the embodiment of the invention to determine a conversion function between real-environment coordinates and coordinates in the corresponding 2D images;
FIG. 6 schematically shows how data entries are generated in the embodiment of the invention according to a predetermined angle;
FIG. 7A and FIG. 7B show a real environment with an articulation angle of 0 degree and the corresponding 2D image, respectively; and

FIG. 8A and FIG. 8B show a real environment with an articulation angle of 60 degrees and the corresponding 2D image, respectively.

DETAILED DESCRIPTION OF THE INVENTION

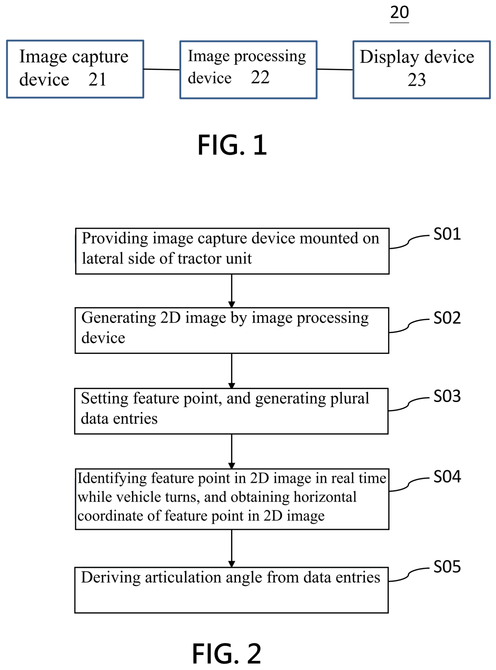

Referring to FIG. 1 to FIG. 3, the method of the present invention for determining the articulation angle between a tractor unit and a semi-trailer using images is applied mainly to an articulated vehicle 10. The method allows the articulation angle between the tractor unit 11 and the semi-trailer 12 of the articulated vehicle 10 to be determined directly by image-based recognition and computation by an on-board image system 20, without having to intervene in the system of the vehicle. Moreover, the articulation angle determined can be used in various warning applications.

As shown in FIG. 1, the basic architecture of an on-board image system 20 suitable for use in this embodiment of the present invention includes at least one image capture device 21 for taking images, an image processing device 22 for image processing and computation, and a display device 23 for display. In practice, two image capture devices 21 will be provided, each mounted on one of the two lateral sides of the tractor unit 11 to take images of the physical environment in a lateral and rearward direction. The image processing device 22 is connected to the at least one image capture device 21 and is configured to receive, and perform the related image conversion operations on, the images taken by the image capture device 21. Depending on practical needs, the image processing device 22 may be additionally provided with functional modules such as those for image recognition and computation in order to derive the articulation angle of the tractor unit 11 with respect to the semi-trailer 12 from real-time images. The display device 23 is connected to the image processing device 22 and is configured to display the 2D images generated from processing by the image processing device 22.

The process flow of the method in this embodiment of the present invention generally includes two parts: a preparatory operation and a recognition and determination operation, the latter of which is to be performed while the vehicle is running. Referring to FIG. 2, steps S01-S03 belong to the preparatory operation, and steps S04 and S05 belong to the recognition and determination operation.

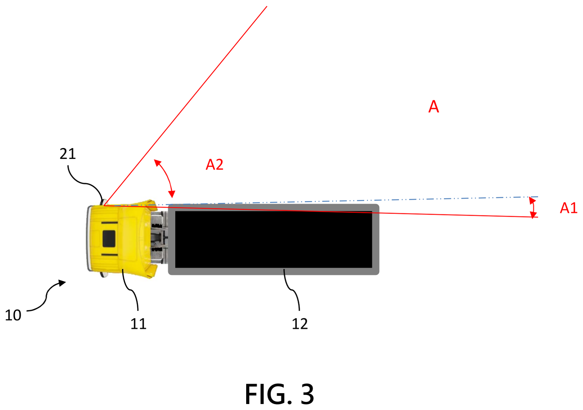

In the preparatory operation, step S01 entails providing at least one image capture device 21 mounted on a lateral side of the tractor unit 11 to take images in a lateral and rearward direction. Referring to FIG. 3, the image capture device 21 has a horizontal field of view A for image taking. Taking the illustrated single side of the vehicle for example, the image capture device 21 in this embodiment of the present invention has a horizontal field of view A for image taking that includes an inner field of view A1 and an outer field of view A2. The inner field of view A1 starts from the exact rear direction of the image capture device 21 and extends in an inward direction toward the tractor unit 11. The outer field of view A2 also starts from the exact rear direction of the image capture device 21 and extends in an outward direction away from the tractor unit 11. The inner field of view A1 preferably spans an angle of three to six degrees to prevent overlapping too much with the semi-trailer, or a considerable portion of the field of view that can be used for image recognition may be wasted. The outer field of view A2 preferably spans an angle of 42-130 degrees, depending on the maximum articulation angle between the tractor unit 11 and the semi-trailer 12 of the articulated vehicle 10, and should generally cover the required field of view when the maximum articulation angle takes place.

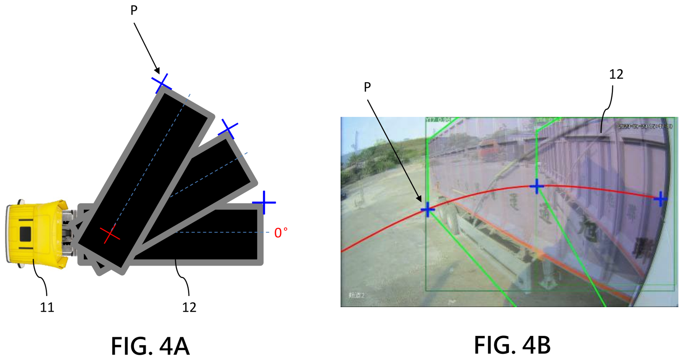

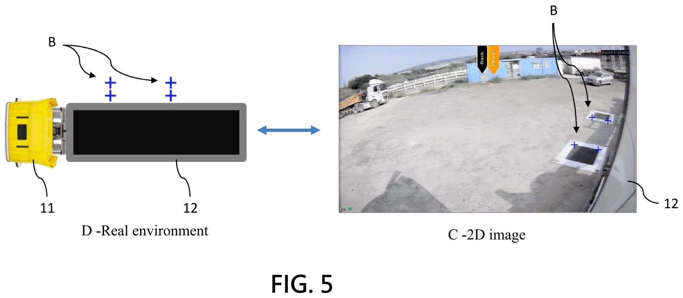

Step S02 is image processing and essentially involves the image processing device 22 receiving an image taken by the image capture device 21 and generating a corresponding 2D image C that can be displayed through the display device 23. Referring to FIG. 4A, FIG. 4B, and FIG. 5, step S03 involves the image processing device 22 setting a feature point P and generating a plurality of data entries that are based on the correspondence between a plurality of different articulation angles referencing the feature point P and image coordinates of the feature point P, wherein the feature point P is an area of the semi-trailer 12 that is on the same side as the image capture device 21.

The principle on which this embodiment of the present invention uses images to determine the articulation angle is explained below with reference to FIG. 4A and FIG. 4B. In a real environment D, the feature point P is turned along with the semi-trailer 12 when the semi-trailer 12 is turned with respect to the tractor unit 11 (see FIG. 4A), and the relative position of the feature point P is changed linearly as the semi-trailer 12 is turned. In the corresponding 2D images C, the relative position of the feature point P is also changed linearly when the semi-trailer 12 is turned (see FIG. 4B). Therefore, the horizontal coordinates of the feature point P in the 2D images C can be used as a basis for determining the articulation angle.

In this embodiment of the present invention, the feature point P is the tail end of the semi-trailer 12 that is on the same side as the image capture device 21, and the generated data entries include the horizontal coordinate of the feature point P in the 2D image C corresponding to each of a plurality of different articulation angles between the tractor unit 11 and the semi-trailer 12 so as to enable conversion between image coordinates and articulation angles.

In this embodiment, the data entries are generated by derivation through a function. To begin with, referring to FIG. 5, a coordinate system is established for the real environment D and for 2D images C. Coordinates in the real environment D are established using such data as a rotation center (e.g., the location of the coupler between the tractor unit 11 and the semi-trailer 12), lengths, and widths, whereas coordinates in 2D images C are based on a 1920×1080 resolution. After that, four corner points B are used to determine a conversion function between coordinates in the real environment D and coordinates in 2D images C via the following homography matrix:

$$s \begin{bmatrix} x' \\ y' \\ 1 \end{bmatrix} = H \begin{bmatrix} x \\ y \\ 1 \end{bmatrix} = \begin{bmatrix} h_{11} & h_{12} & h_{13} \\ h_{21} & h_{22} & h_{23} \\ h_{31} & h_{32} & h_{33} \end{bmatrix} \begin{bmatrix} x \\ y \\ 1 \end{bmatrix}.$$

Then, based on a known set of coordinates of the feature point P in the real environment D, the real-environment-D coordinates of the feature point P consequent to turning to each of the plurality of different articulation angles are calculated using the arctangent function. Lastly, by computation with the conversion function, the coordinates of the feature point P in the 2D image C corresponding to each of the plurality of different articulation angles are derived from the real-environment-D coordinates of the feature point P corresponding to the articulation angle, thereby generating a plurality of data entries of "articulation angles in the real environment D" and "coordinates of the feature point P in 2D images C."

In practice, the data entries can also be generated by, among other methods, recording actual observations. The method of recording actual observations includes: actually operating the articulated vehicle 10 to make turns, or more particularly to turn the tractor unit 11 to each predetermined articulation angle with respect to the semi-trailer 12; identifying the coordinates of the feature point P in the 2D image C corresponding to each predetermined articulation angle; and recording each complete set of coordinates identified or each horizontal coordinate identified. By this method, a plurality of data entries of "articulation angles in the real environment D" and "coordinates of the feature point P in 2D images C" can be obtained just as well.

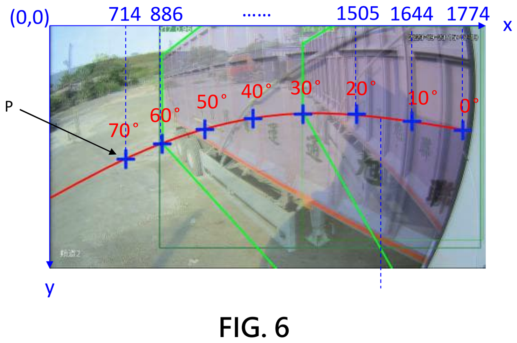

Referring to FIG. 6, the articulation angles in the data entries may have equal angular intervals defined by a predetermined angle, with the horizontal coordinates of the feature point P in the corresponding 2D images C generated accordingly. For example, when the articulation angles are 0, 10, 20, 30, 40, 50, 60, 70, 80, and 90 degrees, the horizontal coordinates of the feature point P in the corresponding 2D images C are 1774, 1644, 1505, 1358, 1206, 1049, 886, 714, 536, and 353, respectively. Thus, when the horizontal coordinate of the feature point P in a real-time image is identified, an approximate current articulation angle can be derived in reverse. In a feasible embodiment, the predetermined angle defining the equal angular intervals is preferably not greater than ten degrees; a smaller angular interval leads to higher accuracy of the articulation angle derived.

Once the aforesaid preparatory operation is completed, the recognition and determination operation of steps S04 and S05 can be carried out while the vehicle is travelling. In step S04, the image processing device 22 uses a built-in image recognition module to identify the feature point P in a 2D image C in real time when the articulated vehicle 10 turns in a direction corresponding to the aforementioned lateral side, and the image processing device 22 obtains the horizontal coordinate of the feature point P in the 2D image C. In step S05 that follows, a built-in computation module of the image processing device 22 derives the current articulation angle of the tractor unit 11 with respect to the semi-trailer 12 from the horizontal coordinate of the feature point P according to the data entries generated in the preparatory operation (i.e., the data of different articulation angles and the corresponding horizontal coordinates of the feature point P). The derivation may involve finding the two data entries whose horizontal coordinates are closest to the current horizontal coordinate of the feature point P and then performing interpolation to derive the articulation angle of the tractor unit 11 with respect to the semi-trailer 12. For example, continuing from the example given in the previous paragraph, if the horizontal coordinate of the feature point P is identified as 1575, the two data entries with the closest horizontal coordinates will be "10 degrees, coordinate 1664" and "20 degrees, coordinate 1505." Therefore, using a proportionality-based method such as interpolation, the angle corresponding to the coordinate 1575 can be derived as approximately 15 degrees, meaning the current articulation angle between the tractor unit 11 and the semi-trailer 12 is approximately 15 degrees.

In this embodiment, the built-in image recognition module of the image processing device 22 uses an object detection model to output the bounding box of an identified object as the detection result, wherein the object detection model may be a computer vision method, a machine learning model, a deep learning model, or an artificial intelligence (AI) model. In this embodiment, with the image capture device 21 mounted on the right side of the tractor unit 11 by way of example, the recognition operation of step S04 is performed by the system directly recognizing the semi-trailer 12 in an image taken by the image capture device 21 mounted on the right side, generating a bounding box for the semi-trailer 12, and obtaining the coordinate of the left border of the bounding box (i.e., the horizontal coordinate of the tail end of the semi-trailer 12 serving as the feature point P). The coordinate obtained is then used in step S05 to derive the articulation angle corresponding to a right turn. By the same token, when it comes to the image capture device 21 mounted on the left side of the tractor unit 11, the recognition operation entails the system recognizing the semi-trailer 12 in a left-side image, generating a bounding box for the semi-trailer 12, and obtaining the coordinate of the right border of the bounding box for use in deriving the articulation angle corresponding to a left turn.

According to the present invention, the preparatory operation, i.e., the mounting of the at least one image capture device 21 and the creation of the system data entries, can be easily accomplished so that the on-board image system 20 can perform the recognition and determination operation of steps S04 and S05 repeatedly while the vehicle is running, thereby deriving the articulation angle between the tractor unit 11 and the semi-trailer 12 rapidly or in real time. Moreover, the articulation angle derived can be further used by the on-board image system 20 or other system devices.

For example, a conventional vehicle is generally mounted with radar sensors, which emit electromagnetic waves and receive the signals reflected by a neighboring object so as to determine the speed of the vehicle, whether or not the vehicle is approaching the object, e.g., another vehicle, and consequently whether or not a warning should be issued. When these sensing functions are applied to the articulated vehicle 10, however, the electromagnetic waves used for sensing tend to impinge on the vehicle body during turns, causing misjudgment and false warning. The AI model-based recognition operation of, and the articulation angle determined by, the present invention can assist in such judgment, thereby facilitating or replacing radar sensing to prevent the aforesaid problem.

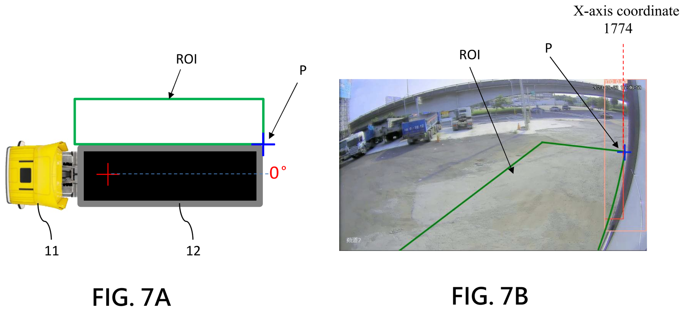

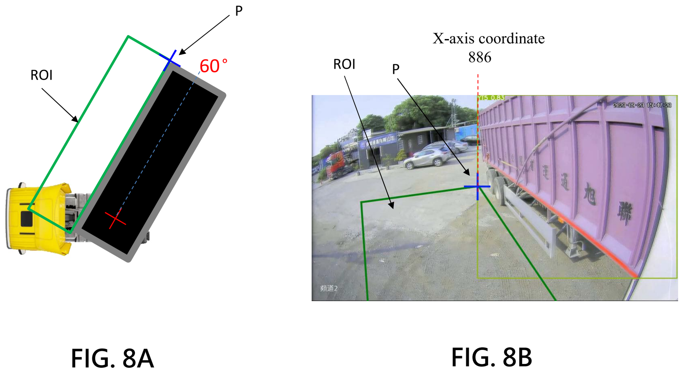

In this embodiment, referring to FIG. 7A to FIG. 7B, the on-board image system 20 can further use the derived articulation angle in vehicle-side early warning detection when the vehicle is turning. An application of this function is as follows. The image processing device 22 can further set an early warning area, or region of interest (ROI), in the 2D images C either in step S02 (image processing) or step S03 (system data setting), wherein the early warning area, or ROI, extends an appropriate distance (or width) from a lateral side of the semi-trailer 12 (see FIG. 7A and FIG. 7B) and serves as a reference range for image recognition to facilitate the determination of whether or not an object is approaching this side of the vehicle. In addition, once the articulation angle of the tractor unit 11 with respect to the semi-trailer 12 is derived in step S05, the system can perform the step of adjusting the early warning area, or ROI, by using the derived articulation angle in conjunction with the aforesaid coordinate conversion function to derive in real time the new early warning area, or ROI, resulting from the change in articulation angle (see FIG. 8A and FIG. 8B). Thus, vehicle-side early warning can be provided precisely in coordination with the angle to which the vehicle has turned, meaning an early warning will be issued to the driver when an obstacle is identified, thereby reducing the accident rate and enhancing the safety of the articulated vehicle 10 during turns.

A more detailed description of the example shown in FIG. 7A and FIG. 7B is given below. Before the vehicle turns, the early warning area, or ROI, where image recognition is performed, is as shown in FIG. 7A and FIG. 7B so that when an approaching object is identified, an early warning module in the system will provide an early warning to the driver. When the vehicle turns, referring to FIG. 8A and FIG. 8B, the method of the present invention allows the feature point P to be recognized in real time, with the horizontal coordinate of the feature point P in the real-time 2D image C identified as 886, and the articulation angle derived from the corresponding data entries as 60 degrees. The image processing device 22 can then use the conversion function to derive the early waring area, or ROI, that has changed because of the turn, in order for the modules related to recognition and early warning to provide early warning precisely in coordination with an appropriate vehicle-side area corresponding to the turn (i.e., the early warning area, or ROI, in the 2D image C that has changed because of the turn).

Aside from adjusting or modifying the vehicle-side early warning area, or ROI, the articulation angle derived by the method of the present invention for determining the articulation angle between a tractor unit and a semi-trailer using images can be used to enhance judgment in relation to lane keeping, fine-tune the viewing angle of an electronic rear-view mirror, adjust a cargo securing device, and so on. The derived articulation angle, therefore, has wide and diverse applicability and is suitable for use with and in various on-board systems.

The description provided above is directed to only a preferred embodiment of the present invention. Any extension, modification, simple change, or equivalent substitution based on the technical means of the invention shall fall within the scope of the claims of the invention.

**Claims**

**1.** A method for determining an articulation angle between a tractor unit and a semi-trailer using images, applied to an articulated vehicle to determine a said articulation angle between said tractor unit and said semi-trailer of the articulated vehicle, the method comprising the steps of:

providing at least one image capture device mounted on a lateral side of the tractor unit to take images in a lateral and rearward direction, wherein the image capture device has a horizontal field of view for image taking, the horizontal field of view includes an inner field of view spanning an angle of at least three degrees and an outer field of view spanning an angle of at least 42 degrees, the inner field of view starts from an exact rear direction of the image capture device and extends in an inward direction toward the tractor unit, and the outer field of view starts from the exact rear direction of the image capture device and extends in an outward direction away from the tractor unit;

receiving an image taken by the image capture device, and generating a corresponding two-dimensional (2D) image displayable through a display device, by an image processing device;

setting as a feature point an area of the semi-trailer that is on a same side as the image capture device, and generating a plurality of data entries based on correspondence between a plurality of different said articulation angles referencing the feature point and image coordinates of the feature point, by the image processing device, wherein the area set as the feature point is a tail end of the semi-trailer; and

recognizing the feature point in a current said 2D image by the image processing device in real time when the articulated vehicle is running and turns in a direction corresponding to the lateral side; obtaining a horizontal coordinate of the feature point in the current 2D image by the image processing device; and deriving the articulation angle of the tractor unit with respect to the semi-trailer from at least two of the data entries that include said horizontal coordinates closest to the horizontal coordinate of the feature point in the current 2D image, by the image processing device.

2. The method for determining an articulation angle between a tractor unit and a semi-trailer using images as claimed in claim 1, wherein the inner field of view spans an angle of three to six degrees, and the outer field of view spans an angle of 42-130 degrees.

3. The method for determining an articulation angle between a tractor unit and a semi-trailer using images as claimed in claim 1 or 2, wherein the data entries include data of the horizontal coordinate of the feature point in the 2D image corresponding to each of the plurality of different articulation angles between the tractor unit and the semi-trailer, and the plurality of different articulation angles in the data entries have equal angular intervals defined by a predetermined angle.

4. The method for determining an articulation angle between a tractor unit and a semi-trailer using images as claimed in claim 3, wherein the predetermined angle is not greater than ten degrees.

5. The method for determining an articulation angle between a tractor unit and a semi-trailer using images as claimed in claim 3, wherein the data entries are generated by recording actual observations, and said recording actual observations comprises: actually operating the tractor unit to turn the tractor unit to each of the plurality of different articulation angles with respect to the semi-trailer; and recording the horizontal coordinate of the feature point in the 2D image corresponding to each of the plurality of different articulation angles.

6. The method for determining an articulation angle between a tractor unit and a semi-trailer using images as claimed in claim 3, wherein the data entries are generated by derivation through a function, and said derivation through a function comprises: using four corner points to determine a conversion function between real-environment coordinates and coordinates in corresponding said 2D images; calculating from a known set of said real-environment coordinates of the feature point the real-environment coordinates of the feature point consequent to turning to each of the plurality of different articulation angles; and deriving the coordinates of the feature point in the 2D image corresponding to each of the plurality of different articulation angles using the conversion function.

7. The method for determining an articulation angle between a tractor unit and a semi-trailer using images as claimed in claim 5, wherein the articulation angle of the tractor unit with respect to the semi-trailer is derived from the at least two data entries including said horizontal coordinates closest to the horizontal coordinate of the feature point in the current 2D image by the image processing device through interpolation.

8. The method for determining an articulation angle between a tractor unit and a semi-trailer using images as claimed in claim 6, wherein the articulation angle of the tractor unit with respect to the semi-trailer is derived from the at least two data entries including said horizontal coordinates closest to the horizontal coordinate of the feature point in the current 2D image by the image processing device through interpolation.

**FIG. 1**

20

| Image capture device 21 | — | Image processing device 22 | — | Display device 23 |

**FIG. 2**

Providing image capture device mounted on lateral side of tractor unit — S01

Generating 2D image by image processing device — S02

Setting feature point, and generating plural data entries — S03

Identifying feature point in 2D image in real time while vehicle turns, and obtaining horizontal coordinate of feature point in 2D image — S04

Deriving articulation angle from data entries — S05

FIG. 3

FIG. 4A

FIG. 4B

D -Real environment

C -2D image

FIG. 5

FIG. 6

FIG. 7A

FIG. 7B

FIG. 8A

FIG. 8B

# EUROPEAN SEARCH REPORT

Europäisches
Patentamt
European
Patent Office
Office européen
des brevets

**Application Number**

**EP 25 22 7279**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2016/049020 A1 (KUEHNLE ANDREAS U [US] ET AL) 18 February 2016 (2016-02-18) <br> * abstract; figures 1-9 * <br> * paragraphs [0005] - [0006] * <br> * paragraph [0027] * <br> * paragraph [0035] * <br> * paragraphs [0038] - [0044] * <br> ----- | 1-8 | INV. <br> G06T7/73 |
| A | US 2024/343195 A1 (KONKA VAMSI KRISHNA [US] ET AL) 17 October 2024 (2024-10-17) <br> * abstract; figures 1-7 * <br> * paragraphs [0004] - [0007] * <br> * paragraphs [0042] - [0044] * <br> * paragraphs [0052] - [0053] * <br> * paragraphs [0064] - [0067] * <br> ----- | 1-8 | |
| A | US 2022/196395 A1 (MAEHNERT UWE [DE] ET AL) 23 June 2022 (2022-06-23) <br> * abstract; figures 1,2,4 * <br> * paragraphs [0030] - [0031] * <br> * paragraph [0035] * <br> * paragraphs [0039] - [0045] * <br> * paragraph [0050] * <br> ----- | 1-8 | TECHNICAL FIELDS SEARCHED (IPC) <br><br> G06T <br> G06V |

The present search report has been drawn up for all claims

| Place of search | Date of completion of the search | Examiner |
|---|---|---|
| Munich | 20 March 2026 | Fronthaler, Hartwig |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

# ANNEX TO THE EUROPEAN SEARCH REPORT
## ON EUROPEAN PATENT APPLICATION NO.

EP 25 22 7279

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2026

| Patent document cited in search report | Publication date | Patent family member(s) | Publication date |
|---|---|---|---|
| US 2016049020 A1 | 18-02-2016 | CN 106796729 A | 31-05-2017 |
| | | EP 3180769 A1 | 21-06-2017 |
| | | HU E048650 T2 | 28-08-2020 |
| | | PL 3180769 T3 | 01-06-2020 |
| | | US 2016049020 A1 | 18-02-2016 |
| | | WO 2016025120 A1 | 18-02-2016 |
| US 2024343195 A1 | 17-10-2024 | CN 118790150 A | 18-10-2024 |
| | | EP 4447004 A1 | 16-10-2024 |
| | | US 2024343195 A1 | 17-10-2024 |
| US 2022196395 A1 | 23-06-2022 | CN 113874914 A | 31-12-2021 |
| | | DE 102019206985 A1 | 19-11-2020 |
| | | EP 3970116 A1 | 23-03-2022 |
| | | US 2022196395 A1 | 23-06-2022 |
| | | WO 2020229094 A1 | 19-11-2020 |

EPO FORM P0459

For more details about this annex : see Official Journal of the European Patent Office, No. 12/82